# EUROPÄISCHE PATENTANMELDUNG

(11) **EP 1 681 133 A2**
(43) Veröffentlichungstag der Anmeldung: **19.07.2006**
(21) Anmeldenummer: 06000925.5
(22) Anmeldetag: 17.01.2006
(51) Int. Cl.: B23Q 17/00, G01B 13/00

(54) **Vorrichtung und Verfahren, um ein Werkstück zu messen oder prüfen**

(30) Priorität: 18.01.2005 DE 102005002448
(71) Anmelder: F.A.T. Fluide Anwendungs Technik GmbH & Co. KG, 58507 Lüdenscheid (DE)
(72) Erfinder: Kaldowski, Astrid, 42659 Solingen (DE)
(74) Vertreter: Wenzel & Kalkoff

(57) **Zusammenfassung**

Gemäß einem erste Aspekt werden ein Verfahren und eine Vorrichtung zur Werkstückkontrolle beschrieben. Vor einer Öffnung 16 kann ein Werkstück 12 angeordnet werden, Ein Fluid unter Druck wird zugeführt, so daß sich ein von der Lage des Werkstücks 12 abhängiger Staudruck einstellt. Ein Druckmeßwert wird erfaßt, mit einem Schwellwert verglichen und abhängig vom Ergebnis des Vergleiches ein Ausgabesignal erzeugt. Um eine möglichst einfache Einstellung zu ermöglichen, können Auswertemittel 32 in einen Einstellungsmodus versetzt werden, wobei ein Einstellungs-Druckwert an einem Referenz-Werkstück ermittelt und abgespeichert wird und der Schwellwert festgelegt wird.

Ein zweiter Aspekt betrifft eine Dickenkontrolle eines Werkstücks. Ein Fluid unter Druck wird einer Öffnung 76 zugeführt, so daß sich ein von der Dicke eines Werkstücks 72 auf einer Auflage unter der Öffnung abhängiger Staudruck einstellt. Ein hiervon abhängiger Druckmeßwert wird erfaßt und verarbeitet.

Ein dritter Aspekt betrifft die Überprüfung der Schließung einer Form. An einem Formteil 82 ist eine Öffnung 88, 92 gebildet, so daß sich abhängig von der Schließung mit einem zweiten Teil 84 der Form 80 ein Staudruck einstellt Ein hiervon abhängiger Druckmeßwert wird erfaßt und verarbeitet.

Gemäß einem vierten Aspekt kann die Messung auch nach dem Unterdruckprinzip erfolgen.

## Beschreibung

Die Erfindung betrifft ein Verfahren zur Werkstückkontrolle, eine Meß-, Steuer- oder Prüfvorrichtung, ein Verfahren und eine Vorrichtung zur Dickenkontrolle eines Werkzeugstücks, sowie ein Verfahren und eine Vorrichtung zur Überprüfung der Schließung einer Form und ein Verfahren zur Lagekontrolle.

Verfahren zur Werkstückkontrolle und entsprechende Steuervorrichtungen sind in Form von pneumatischen Auflagenkontrollvorrichtungen bekannt.

Bspw. zeigt die DE-A 196 08 879 eine solche Vorrichtung, bei der in einer Auflagefläche einer Spanneinrichtung Düsen angeordnet sind. Ein Druckmedium, vorzugsweise Druckluft, wird zu den Austrittsdüsen geleitet. Ein der Spannvorrichtung zugeführtes Werkstück verschließt je nach seiner Lage die Düsen, so daß es zur Ausbildung eines Staudrucks kommt. Befindet sich allerdings ein Fremdkörper zwischen Auflagefläche und Werkstück, so bildet sich ein Spalt, der zu einem geringeren Druckwert führt. Der Staudruckwert wird erfaßt und in Abhängigkeit hiervon ein Signal ausgelöst, welches bei nicht korrekter Lage die Fixierung des Werkstücks in der Spanneinrichtung verhindert. Bei der in der DE-A 196 08 879 beschriebenen Vorrichtung wird eine Justierung des zulässigen Druckwerts vorgenommen, indem ein spezieller Spaltleckage-Simulator angeschlossen wird.

Eine ähnliche Vorrichtung zeigt die DE-A 101 55 135. Auch hier wird der Staudruck an einer Referenzdüse gemessen. Die wirksame Austrittsfläche der Referenzdüse ist hierbei einstellbar.

Die DE-A 102 39 079 zeigt eine pneumatische Auflagenkontrolleinrichtung. Auch hier strömt aus einer Meßdüse austretende Druckluft gegen ein gegenüber der Düse angeordnetes Werkstück. In der Zuleitung zur Meßdüse ist eine Drossel angeordnet. Mittels eines Differenzdrucksensors wird der Druckabfall über die Drossel ermittelt. Der Differenzdrucksensor ist als Schwellwertschalter ausgebildet und gibt ein elektrisches binäres Signal aus, das davon abhängig ist, ob der Staudruck oberhalb oder unterhalb eines vordefinierten Grenzdifferenzdrucks liegt.

Bei sämtlichen der genannten Vorrichtungen ist die Einstellung der Kontrollvorrichtung relativ aufwendig. Die Einstellung mittels eines Blendenrades oder eines Spaltsimulators erfordert vom Bediener umfangreiche Überlegungen und oft eine empirische Überprüfung. Der sich einstellende Staudruck kann nämlich zusätzlich zum Spaltabstand auch von der Beschaffenheit des Werkstücks, insbesondere seiner Oberfläche abhängig sein. Denn während eine glatte Oberfläche bei glatter Auflage relativ gut dichtet, kann eine rauhe Oberfläche selbst bei optimal positioniertem Werkstück zu einem verminderten Staudruck führen.

Aufgabe der Erfindung ist es einerseits ein Verfahren zur Werkstückkontrolle und eine Meß-, Steuer- oder Prüfvorrichtung vorzuschlagen, bei denen die Einstellung der Vorrichtung auf die Überprüfung eines bestimmten Typs von Werkstück besonders einfach ist. Andererseits ist es Aufgabe der Erfindung, eine breitere Verwendung der pneumatischen Abstandsmessung zu ermöglichen.

Diese Aufgabe wird gelöst durch ein Verfahren zur Werkstückkontrolle nach Anspruch 1 und eine Meß-, Steuer- oder Prüfvorrichtung nach Anspruch 3. Die weiterführende Aufgabe wird gelöst durch ein Verfahren und eine Vorrichtung zur Dickenkontrolle eines Werkstücks nach den Ansprüchen 10, 11 und ein Verfahren, eine Vorrichtung zur Überprüfung der Schließung einer Form nach den Ansprüchen 12, 13 und ein Verfahren zur Lagekontrolle nach Anspruch 14. Abhängige Ansprüche beziehen sich auf vorteilhafte Ausführungsformen der Erfindung.

Bei dem Verfahren nach Anspruch 1 und der Vorrichtung nach Anspruch 3 wird entweder einer Öffnung ein unter Druck stehendes Fluid, bevorzugt Druckluft zugeführt oder ein Fluid wird durch Unterdruck durch die Öffnung angesaugt, so daß sich ein Druck einstellt, der davon abhängt, wie frei das Fluid aus der oder in die Öffnung strömen kann, also von der Lage eines Werkstücks vor der Öffnung. Zur sprachlichen Vereinfachung und Zusammenfassung der Lösungen mit Über- und Unterdruck wird hier in beiden Fällen der Begriff "Staudruck" verwendet. Dieser Staudruck wird als Druckmeßwert erfaßt und mit einem Schwellwert verglichen. Abhängig vom Ergebnis des Vergleiches wird ein Ausgabesignal erzeugt, also bspw. entweder ein Fehlersignal für den Fall nicht korrekter Anlage oder ein Ansteuersignal bei korrekter Positionierung. Mit Hilfe dieses Signals kann eine Maschine, bspw. eine Bearbeitungs- oder Umformmaschine wie eine Fräse oder Presse gesteuert werden, so daß sie erst bei Vorliegen eines Ansteuersignals die Bearbeitung durchführt und im Fall eines Fehlersignals keine Bearbeitung zuläßt.

Erfindungsgemäß wird zur Einstellung des Schwellwerts ein Referenz-Werkstück vor der Öffnung angeordnet. Dann wird ein Einstellungs-Druckwert ermittelt und abgespeichert. Anhand dieses Einstellungs-Druckwertes wird der Schwellenwert festgelegt. Hierbei kann einerseits der bei korrekter Anordnung des Referenz-Werkstücks gemessene Druckmeßwert direkt als Einstellungs-Druckwert abgespeichert werden und hieraus beim späteren Vergleich jeweils der Schwellenwert berechnet werden, bspw. durch Addition einer festen oder einstellbaren Toleranzschwelle. Andererseits kann auch der am Referenz-Werkstück gemessene Druckwert zunächst weiterverarbeitet werden, bspw. durch Addition eines festen oder einstellbaren Toleranzwertes, und so der Einstellungs-Druckwert ermittelt werden, der dann abgespeichert wird. Im letzteren Fall dient der gespeicherte Wert direkt als Schwellwert, ohne daß im Betrieb weitere Berechnungen notwendig sind.

Die Vorrichtung kann hierfür mittels einer Eingabevorrichtung - bspw. einem entsprechenden Schalter - in einen Einstellungsmodus versetzt werden. Die Eingabevorrichtung kann nach Positionierung des Referenz-Werkstücks aktiviert werden, so daß die Auswertemittel der Vorrichtung den aktuellen Druckmeßwert erfassen und diesen als Einstellungs-Druckwert abspeichern oder hieraus den Einstellungs-Druckwert ermitteln.

Die erfindungsgemäße Vorrichtung und das erfindungsgemäße Verfahren ermöglichen so eine sehr einfache Einstellung. Es müssen keine empirischen Daten, bspw. Tabellen etc. verwendet werden und seitens des Bedienpersonals sind keine speziellen Kenntnisse erforderlich. Die Einstellung erfolgt sehr einfach über Auflegen des Referenzstücks und Aktivieren des Einstellungsmodus, bspw. durch einen Tastendruck. Die Messung, Ermittlung und Abspeicherung des Einstellungs-Druckwertes erfolgt dann automatisch. Während bei vorbekannten Vorrichtungen mit einstellbaren Blenden oder Spaltsimulatoren stets Spezialkenntnisse und oft verschiedene Versuche erforderlich waren um eine Anpassung an einen neuen Typ von Werkstücken durchzuführen, entfallen bei der Erfindung derartige Schwierigkeiten. Diese Vorteile zeigen sich besonders deutlich, wenn der Staudruck maßgeblich von der Oberflächenbeschaffenheit des Werkstücks abhängt. Auch in diesem Fall liefern die erfindungsgemäße Vorrichtung und das erfindungsgemäße Verfahren auf einfache Weise sehr gute Ergebnisse.

Eine Weiterbildung der Erfindung betrifft eine automatische Erkennung eines Werkstücks vor der Öffnung. Eine solche Erkennung ist auf besonders einfache Weise möglich, in dem zunächst bei freier Öffnung ein Leerlauf-Druckwert gemessen und abgespeichert wird. Dieser Leerlauf-Druckwert beinhaltet somit sämtliche evtl. Verluste im pneumatischen Teil der Vorrichtung und kann als Referenz dafür herangezogen werden, ob ein Werkstück vor der Öffnung angeordnet ist oder nicht. Hierfür wird der Staudruck jeweils ermittelt und mit dem Leerlauf-Druckwert verglichen. Ab einer festgelegten absoluten oder relativen Abweichung kann davon ausgegangen werden, daß ein Werkstück aufgelegt wurde. Eine derartige automatische Werkstückererkennung vereinfacht die Handhabung der Vorrichtung für das Bedienpersonal erheblich. Sie kann im Einstellungsmodus und/oder im späteren Betriebsmodus verwendet werden. Die Leerlaufmessung kann einmal erfolgen und der hierbei abgespeicherte Wert für längere Zeit im nachfolgenden Betrieb im Einstellungs- und/oder Betriebsmodus verwendet werden. Ebenso ist eine gelegentliche neue Erfassung des Leerlauf-Druckwertes möglich, z. B. zur Anpassung an geänderte Betriebsbedingungen.

Gemäß einer Weiterbildung der Erfindung wird von einer Fluidquelle bzw. einer Unterdruckeinheit (z.B. Pumpe) das Fluid unter einem Vordruck zugeführt oder durch einen Unterdruck angesaugt. Es strömt über ein Blendenelement zur oder von der Öffnung, wobei das Blendenelement einen gegenüber der sonstigen Verbindung verringerten Querschnitt aufweist. Strömt nun an der Öffnung eine gewisse Menge an Fluid, so stellt sich hinter dem Blendenelement, d. h. in einer Zuführung zur Öffnung ein Staudruck ein, der mittels eines Drucksensors erfaßt wird. Der Aufbau ist hierbei besonders einfach. Der Drucksensor kann einerseits als Differenzdrucksensor ausgebildet sein, der die Druckdifferenz über dem Blendenelement mißt. Auf diese Weise kann sehr genau und unabhängig von evtl. Schwankungen des Vordrucks ein Druckmeßwert ermittelt werden, der ein sehr genaues Maß für die korrekte Lage des Werkstücks vor der Öffnung darstellt. Andererseits kann auch ein Absolutdrucksensor für den Staudruck verwendet werden.

Gemäß einer Weiterbildung der Erfindung ist hierbei vorgesehen, daß das Blendenelement als Schaltventil ausgebildet ist. Ein solches Schaltventil kann durch externen, bevorzugt elektrischen Steuerbefehl geöffnet oder geschlossen werden. So kann ein ständiges verbrauchintensives und ggf. störendes Strömen des Fluids vermieden werden. Das Schaltventil kann bspw. so geschaltet werden, daß es nur zum Zeitpunkt der Messung geöffnet wird und im übrigen geschlossen bleibt. Durch Verwendung eines Schaltventils mit entsprechend verringertem Querschnitt wird ein zusätzliches Blendenelement eingespart.

Eine vorteilhafte Weiterbildung sieht vor, daß der Drucksensor, sei es ein Differenzdrucksensor oder Absolutdrucksensor, den Druckmeßwert als elektrisches Sensorsignal liefert. Die Auswertemittel umfassen dann eine elektrische Schaltung zur Verarbeitung des Sensorsignals. Damit wird der pneumatische Teil der Vorrichtung auf ein Minimum reduziert: Fluidquelle bzw. Unterdruckeinheit, Blende/Schaltventil, Öffnung und Verbindungsleitungen. Sämtliche Verarbeitung, sowohl im Prüfbetrieb als auch im Einstellungs-Modus erfolgt in der elektrischen Schaltung. Dies sorgt für geringe Herstellungskosten, gute Prüf- und Wartungsfähigkeit sowie eine sehr flexible Konfigurierbarkeit mit einfachen Umrüstmöglichkeiten.

Die elektrische Schaltung kann zusätzlich zu einem Speicherelement für den Einstellungs-Druckwert (bzw. bei Verwendung eines Differenzdrucksensors des Einstellungs-Differenzdruckwertes) ein weiteres Speicherelement für einen Toleranzwert aufweisen. Dieser Toleranzwert kann fest vorgegeben sein. Bevorzugt ist er einstellbar, bspw. über die Eingabevorrichtung veränderbar. Der Schwellwert entspricht der Differenz aus dem im Einstellungs-Modus gemessenen Druckmeßwert und dem Toleranzwert bzw. im Fall der Erfassung von Differenzdrücken der Summe dieser Werte.

Das erfindungsgemäße Verfahren zur Dickenkontrolle eines Werkstücks nach Anspruch 10 und die entsprechende Vorrichtung nach Anspruch 11 sieht eine Auflage zur Aufnahme eines Werkstücks vor. Oberhalb der Auflage ist eine Öffnung angeordnet, die von einer Fluidquelle ein Fluid unter Druck zugeführt wird oder durch die von einer Unterdruckeinheit ein Fluid angesaugt wird, so daß sich ein von der Dicke des Werkstücks abhängiger Staudruck einstellt. Ein entsprechender Druckmeßwert wird gemessen, mit einem Schwellwert verglichen und abhängig vom Ergebnis des Vergleiches ein Ausgabesignal erzeugt.

Diese Vorrichtung und das entsprechende Verfahren eignen sich bspw. für eine Dickenkontrolle eines flächigen Werkstücks, wie Bandstahl in einer Walzstraße. Der sich einstellende Staudruck ist abhängig von der Dicke des Werkstücks. So ist es möglich, diese Dicke zu messen und zu überwachen, wobei Abweichungen in einem Ausgabesignal signalisiert werden können.

Für die Dickenkontrolle können verschiedene Verfahren und Vorrichtungen zur Ermittlung des Staudrucks und Verarbeitung der entsprechenden Signale verwendet werden. Bevorzugt werden das oben beschriebene Verfahren und die oben beschriebene Vorrichtung mit einem Absolut- oder Differenzdrucksensor und/oder der Möglichkeit einer Einstellung des Schwellenwerts in einem Einstellungs-Modus.

Gemäß einem weiteren Aspekt der Erfindung wird ein Verfahren und eine Vorrichtung zur Überprüfung der Schließung einer Form vorgeschlagen. Die Form umfaßt einen ersten und einen zweiten Formteil, die bei geschlossener Form aneinander anliegen. Am ersten Formteil ist eine Öffnung vorgesehen, die in Richtung auf den zweiten Formteil geöffnet ist. Abhängig von der Schließung der Form, d. h. vom Abstand zwischen der Öffnung und dem zweiten Formteil stellt sich bei Zufuhr oder Absaugen eines Fluids ein Staudruck ein. Ein hiervon abhängiger Druckmeßwert wird erfaßt und mit einem Schwellwert verglichen. Abhängig vom Ergebnis des Vergleiches wird ein Ausgabesignal erzeugt.

Bei der Form kann es sich um jede beliebige mehrteilige, schließbare Form handeln, bspw. um eine Guß- oder Spritzform. An der Form können mehrere Öffnungen vorgesehen sein. Die Öffnungen können direkt am ersten Formteil gebildet sein, oder an einer mit diesem verbundenen Vorrichtung.

Mit diesem Aspekt der Erfindung kann auf einfache Weise die Schließung einer Form überprüft werden. Abhängig von dem Ausgabesignal kann die Verwendung der Form so gesteuert werden, daß bspw. bei nicht ausreichend geschlossener Form ein Füllen, d. h. bspw. Gießen oder Spritzgießen nicht möglich ist.

Die Erfassung des Staudrucks und Verarbeitung der Meßwerte kann mit sämtlichen geeigneten Vorrichtungen und Verfahren erfolgen. Bevorzugt werden die oben beschriebenen Verfahren und Vorrichtungen, bei denen ein Absolut- oder Differenzdruck ermittelt wird und/oder in einem Einstellungsmodus ein Schwellwert festgelegt wird.

Gemäß einem weiteren Aspekt der Erfindung wird ein Verfahren zur Lagekontrolle vorgeschlagen, daß ebenso wie bekannte Verfahren und Vorrichtungen den Staudruck an einer durch ein zu prüfendes Teil ganz oder teilweise verschlossenen Öffnung auswertet. Allerdings funktioniert das Verfahren und eine hiernach arbeitende Vorrichtung nicht mit Über-, sondern mit Unterdruck.

Hierbei wird ein zu prüfendes Teil vor einer Öffnung angeordnet. Bei dem zu prüfenden Teil kann es sich um ein Werkstück handeln, oder um ein sonstiges Teil, bspw. um ein Teil einer Form. Durch die Öffnung wird ein Fluid angesaugt, bevorzugt die Umgebungsluft. Abhängig von der Lage des Teils vor der Öffnung stellt sich ein Staudruck ein. Ein Druckmeßwert, der von dem Staudruck abhängig ist, wird erfasst. Dieser Druckmeßwert kann auch im Unterdruckbereich ein Absolutdruck an der Öffnung oder ein Differenzdruck zwischen dem Unterdruck einer Unterdruckeinheit und dem Staudruck an der Öffnung sein.

Die Funktionsweise des Verfahrens nach dem Unterdruckprinzip entspricht ebenso wie der Aufbau und die Funktion entsprechender Vorrichtungen weitgehend bekannten Verfahren und Vorrichtungen nach dem Überdruckprinzip. Entsprechend können die dort bekannten und insbesondere die oben beschriebenen Ergänzungen und Weiterbildungen identisch oder nach geeigneter Anpassung (Berücksichtigung einer Vorzeichenumkehr) übernommen werden.
Die Messung bzw. Überwachung mit Unterdruck kann auch für Einsatzzwecke verwendet werden, in denen das Zuströmen eines Fluids, insbesondere Druckluft störend oder schädlich ist, bspw. bei der Überprüfung der Schließung einer Form.

Ein mögliches Problem stellen Fremdkörper dar, bspw. Späne, die bei der Messung angesaugt werden können. Ist diese Gefahr gegeben müssen entsprechende Vorrichtungen (Filter; Reinigungsvorrichtungen etc.) vorgesehen werden.

Nachfolgend werden Ausführungsbeispiele der Erfindung anhand von Zeichnungen näher beschrieben. In den Zeichnungen zeigen:
- Fig. 1: eine Querschnittsansicht eines Werkstücks vor einer Ausströmöffnung;
- Fig. 2: eine symbolische Darstellung des pneumatischen und elektrischen Schaltplans einer ersten Ausführungsform einer Steuervorrichtung;
- Fig. 3: eine perspektivische Ausicht der Vorrichtung aus Fig. 2;
- Fig. 4: eine Ansicht eines Querschnitts durch die Vorrichtung aus Fig. 3;
- Fig. 5: eine symbolische Darstellung des pneumatischen und elektrischen Schaltplans einer zweiten Ausführungsform einer Steuervorrichtung;
- Fig. 6: eine Ansicht eines Querschnitts durch eine Vorrichtung gemäß der zweiten Ausführungsform;
- Fig. 7: eine symbolische Darstellung eines Längsschnitts durch eine Vorrichtung zur Dickenmessung:
- Fig. 8: eine symbolische Darstellung eines Längsschnitts durch eine Vorrichtung zur Überprüfung der Schließung einer Form.

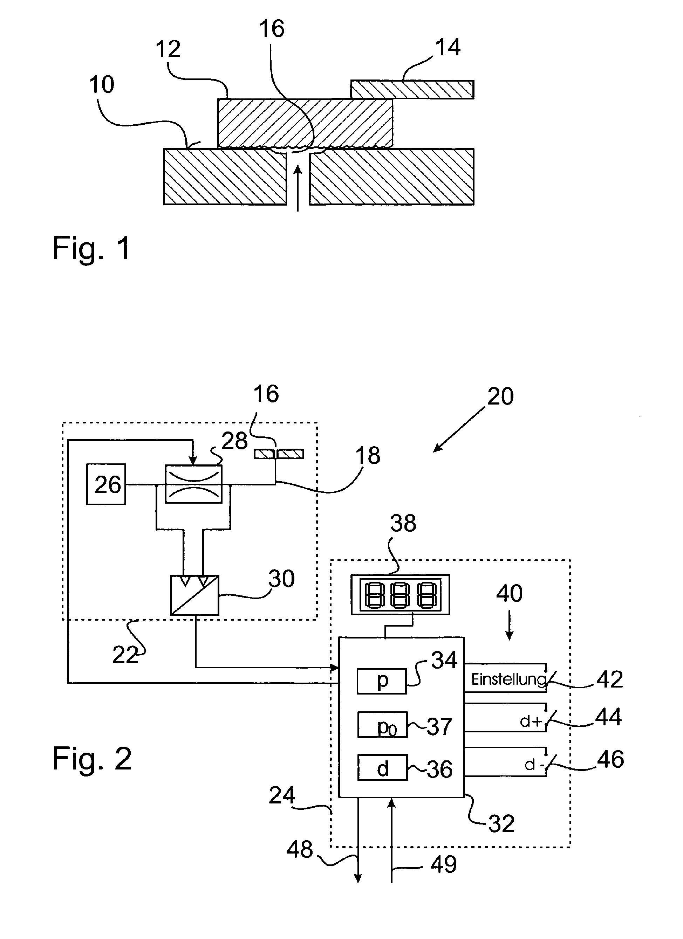

In Fig. 1 ist das Prinzip einer Auflagekontrolle dargestellt. Auf einer Auflagefläche 10 ist ein Werkstück 12 angeordnet Eine Einspannung 14 fixiert das Werkstück 12.

In der Auflagefläche 10 ist eine Öffnung 16 gebildet, die mit einem Leitungskanal 18 verbunden ist.

Die Vorrichtung kann nach dem Überdruckprinzip oder nach dem Unterdruckprinzip arbeiten. Bei einer Überdruckvorrichtung wird ein Fluid unter Überdruck (d.h. höher als der Umgebungsdruck) zugeführt.

Durch den Leitungskanal 18 strömt in Pteilrichtung Druckluft zur Ausströmöffnung 16. Durch das Werkstück 12 ist die Ausströmöffnung 16 zwar zum Teil verschlossen. Jedoch weist das Werkstück 12 eine relativ rauhe untere Oberfläche auf, so daß es die Öffnung 16 nicht vollständig verschließt.

Der sich einstellende Staudruck in der Zuleitung 18 ist damit abhängig einerseits von der korrekten Positionierung des Werkstücks 12 auf der Auflagefläche 10. Ist das Werkstück 12 schräg angeordnet, weil sich bspw. ein Fremdkörper zwischen dem Werkstück 12 und der Oberfläche 10 befindet, so kann mehr Druckluft ausströmen und der Staudruck ist geringer. Andererseits ist der Staudruck auch von der Oberflächenbeschaffenheit abhängig. Je rauher die Oberfläche des Werkstücks 12, desto geringer ist der Staudruck.

Bei einer Erfassung nach dem Unterdruckprinzip wird das umgebende Fluid (d.h. üblicherweise die Umgebungsluft) durch den Leitungskanal 18 und die Öffnung 16 angesaugt, indem ein Unterdruck (d.h. kleiner als der Umgebungsdruck) erzeugt wird. Auch hier stellt sich ein Staudruck je nach Oberfläche und Position des Werkstücks 12 ein.

In Fig. 2 ist der elektrische und pneumatische Schaltplan einer ersten Ausführungsform einer Vorrichtung 20 zur Werkstückkontrolle dargestellt, bei der die Lage eines Werkstücks vor der Ausströmöffnung 16 überprüft wird.

Die Vorrichtung umfaßt einen pneumatischen Teil 22 und einen elektrischen Teil 24. Im pneumatischen Teil 22 liefert eine Fluidquelle 26 Druckluft unter einem Vordruck von bspw. 0,5-6 bar, bei der bevorzugten Ausführung z. B. 1 bar. Über eine Blende 28 und die Zuleitung 18 strömt die Druckluft zur Ausströmöffnung 16. Ein Differenzdrucksensor 30 mißt den Druckabfall über dem Blendenelement 28, d. h. die Druckdifferenz zwischen dem von Quelle 26 gelieferten Vordruck und dem sich an der Ausströmöffnung 16 einstellenden Staudruck. Der Differenzdrucksensor 30 übermittelt den Differenzdruck-Meßwert als elektrisches Signal an den elektrischen Teil 24.

Die Blende 28 ist als elektrisch ansteuerbares Schaltventil ausgebildet. Die Ansteuerung erfolgt vom elektrischen Teil 24 der Vorrichtung.

Im elektrischen Teil 24 wird das Meßsignal von einer Steuereinheit 32 verarbeitet. In der Steuereinheit 32 ist ein erstes Speicherelement 34 für einen Druckwert p und ein zweites Speicherelement 36 für einen Toleranzwert d vorgesehen. Die Steuereinheit 32 ist mit einer Anzeige 38 und einer Eingabevorrichtung 40 verbunden, die im gezeigten Beispiel 3 elektrische Schalter 42, 44, 46 umfaßt.

Die Steuereinheit 32 weist weiter einen Ausgangsanschluß 48 und einem Eingangsanschluß 49 auf. Am Ausgangsanschluß 38 kann ein Ausgangssignal geliefert werden, das bspw. als Anzeigesignal oder Steuersignal genutzt werden kann.

Die Steuereinheit 32 ist eine Mikroprozessor-Einheit mit einem Mikroprozessor und einem Programmspeicher (nicht gezeigt) mit einem Betriebsprogramm, das vom Mikroprozessor ausgeführt wird.

Eine Vorrichtung nach dem Unterdruckprinzip ist hier nicht separat gezeigt. Sie unterscheidet sich von der dargestellten Ausführung jedoch lediglich dadurch, daß die Fluidquelle 26 durch eine Vakuumpumpe ersetzt wird.

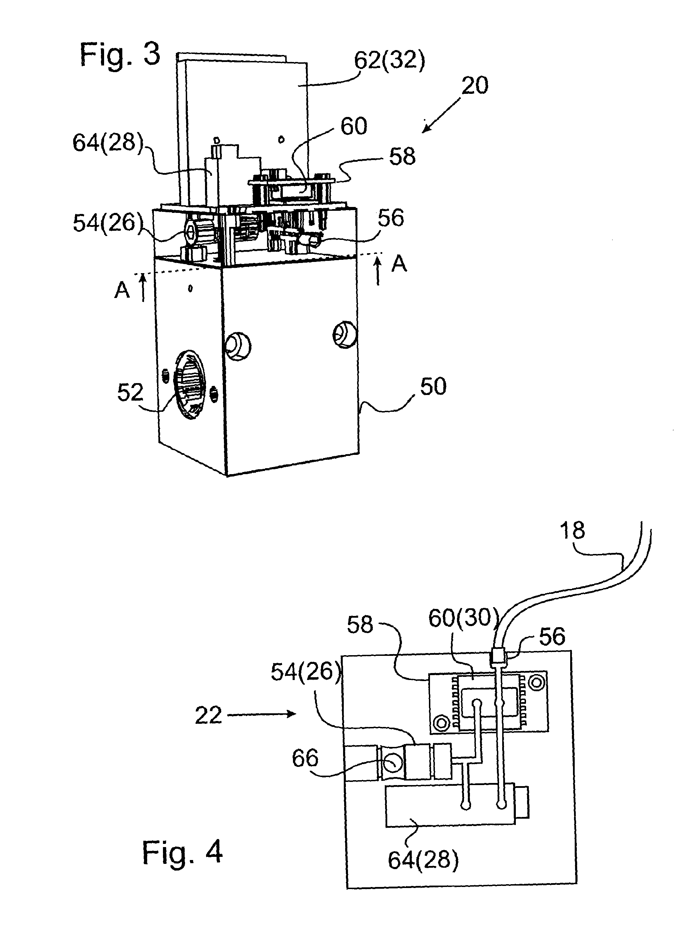

In Fig. 3 ist die Vorrichtung 20 in einer perspektivischen Darstellung gezeigt. Auf einem Grundblock 50 mit Anschlüssen 52 an ein Druckluft-Netz befindet sich ein Aufbau mit einem Druckregler 54, der an die Luftdruckversorgung 52 angeschlossen ist und den dortigen Druck auf den benötigten Vordruck von im gezeigten Beispiel 1 bar reduziert. Weiter umfaßt der Aufbau einen Anschluß 56 für einen Druckschlauch als Zuleitung 18 zur Ausströmöffnung 16 und den an einer Platine 58 angebrachten Differenzdrucksensor 60. Weiter umfaßt die Vorrichtung einen Schaltungsträger 62 mit der Steuereinheit 32 und ein hierdurch gesteuertes Schaltventil 64, das im geöffneten Zustand als Blendenelement 28 eingesetzt wird.

Die pneumatische Verbindung der Elemente ist aus der Schnittansicht in Fig. 4 erkennbar. Fig. 4 zeigt eine Ansicht eines Querschnitts durch die Vorrichtung 20 in Höhe der Linie A-A in Pfeilrichtung, d. h. von unten.

Der Druckregler 54 ist mit einem Eingang 66 an die Luftdruckversorgung des Grundblocks 50 angeschlossen. Sein Ausgang ist einerseits mit einem ersten Teil des Differenzdrucksensors 60 verbunden und andererseits an den Eingang des Schaltventils 64 angeschlossen. Der Ausgang des Schaltventils 64 ist mit dem Anschluß 56 verbunden, wobei ein Abzweig zum zweiten Teil des Differenzdrucksensors 60 führt. Am Anschluß 56 ist die Zuleitung 18 zur Ausströmöffnung 16 angeschlossen.

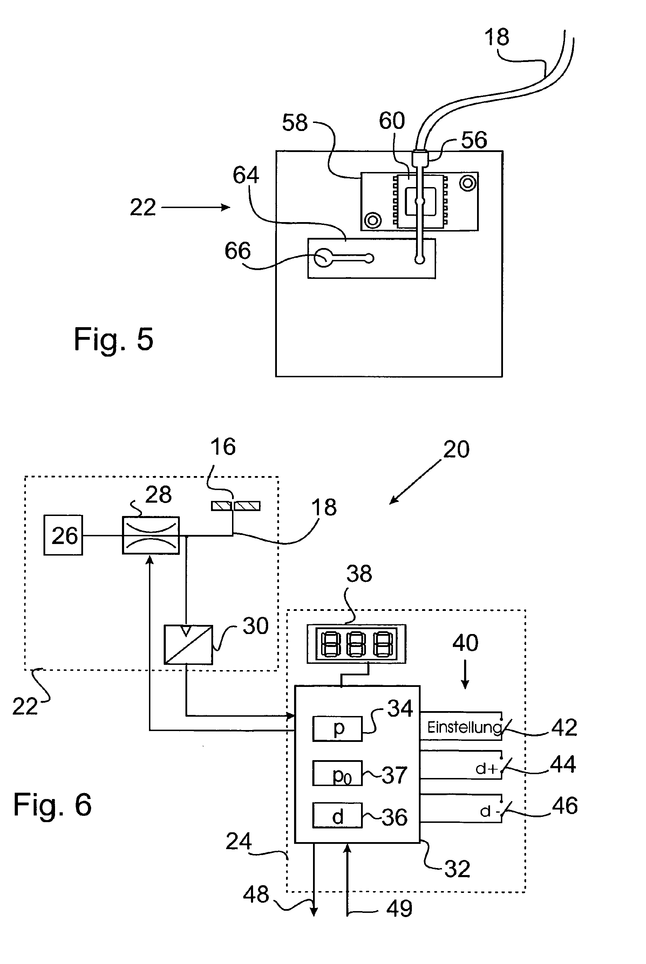

In Fig. 5, 6 ist eine zweite Ausführungsform der Vorrichtung 20 gezeigt. Die zweite Ausführungsform entspricht weitgehend der ersten Ausführungsform, so daß hier nur die Unterschiede erläutert werden sollen.

In der zweiten Ausführungsform wird anstelle eines Differenzdrucksensors ein Absolutdrucksensor 30 verwendet. In der Folge wird kein Druckregler benötigt, sondern es wird mit dem vollen Leitungsdruck der zugeführten Druckluftvrersorgung gearbeitet. An dessen Eingang 66 ist direkt das Schaltventil 64 angeschlossen, das auch hier gleichzeitig als Blendenelement wirkt Der Staudruck in der Zuleitung 18 wird durch den Absolutdrucksensor 30 bzw. 60 erfaßt.

Wie aus Fig. 2 bis 6 erkennbar, ist der pneumatische Teil 22 der Vorrichtungen 20 jeweils sehr einfach und mit wenigen Elementen aufgebaut. Die Funktionen werden maßgeblich durch den elektrischen Teil, hier insbesondere die Steuereinheit 32 ausgeführt. Nachfolgend wird diese Funktion beschrieben.

Hierbei sei angenommen, daß die Vorrichtung 20 (ausgebildet nach der ersten oder zweiten Ausführungsform) als Steuervorrichtung an einer Bearbeitungsmaschine, bspw. einer Fräse, angeordnet ist, in der Werkstücke vom Typ des Werkstücks 12 bearbeitet werden sollen. Die Ausgangsleitung 48 und der Eingangsanschluß 49 sind hierbei an eine Steuerung der Fräse so angeschlossen, daß vor Beginn der Bearbeitung ein Steuersignal die Durchführung der Messung auslöst und erst bei einem entsprechenden Freigabesignal auf der Ausgangsleitung 48 die Bearbeitung beginnt.

Zur Einstellung der Steuervorrichtung 20 auf den Typ des zu bearbeitenden Werkstücks aktiviert zunächst das Bedienpersonal der Vorrichtung den Schalter 42 der Steuervorrichtung, so daß die Steuervorrichtung in einen Einstellungsmodus versetzt wird. Im Einstellungsmodus führt die Vorrichtung 20 eine Referenz-Messung durch. Hierfür steuert die Steuereinheit 32 das Schaltventil 64 so an, daß es geöffnet wird und Druckluft vom Ausgang des Druckreglers 54 zur Ausströmöffnung 16 strömt. In der Zuleitung 18 bildet sich nun abhängig von der Lage des Referenz-Werkstücks ein Staudruck. Die Verarbeitung erfolgt aber erst, nachdem ein Referenz-Werkstück aufgelegt wird.

Von der Vorrichtung wird automatisch ermittelt, ob das Referenz-Werkstück bereits aufgelegt wurde. Hierfür ist in einem Speicher 37 der Schaltung 32 ein Leerlauf-Druckwert pₒ abgespeichert. Der Wert pₒ wurde zuvor als Druckmeßwert des Drucksensors 30 bei freier Öffnung 16 ermittelt. Der Wert pₒ dient als Referenzwert für den möglichen Wertebereich des jeweiligen Druckmeßwertes und beinhaltet sämtliche Verluste, die durch den aktuellen Aufbau der Vorrichtung und die Umgebungsbedingungen bedingt sind.

Anhand des Leerlauf-Wertes pₒ kann leicht entschieden werden, ob ein Werkstück aufgelegt ist oder nicht. Bevorzugt ist in der Schaltung 32 ein vorgegebener absoluter oder relativer Wert gegeben, anhand dessen das Vorhandensein eines Werkstücks beurteilt wird. Liegt bspw. der Betriebsdruck bei der zweiten Ausführungsform bei 10 bar und wurde ein Leerlauf-Druckwert pₒ von 8 bar gemessen, so kann als Schwelle für die Erkennung eines Werkstücks bspw. 8,5 bar vorgegeben sein.

Im Einstellungsmodus wird der Druckmeßwert durch den Sensor 30, 60 kontinuierlich erfaßt, aber erst bei Vorliegen eines plausiblen, stabilen Meßwerts weiterverarbeitet. Hierfür muß einerseits das Vorhandensein eines Werkstücks erkannt worden sein (d. h., im obigen Beispiel muß der Staudruck oberhalb von 8,5 bar liegen). Andererseits sollte der Meßwert auch über eine vorgegebene Zeit, bspw. 2 Sekunden, mit vorgegebener maximaler Schwankung konstant sein. Dann erst erfolgt die Verarbeitung des Meßwertes.

Bei der ersten Ausführungsform ermittelt der Differenzdrucksensor 60 die Differenz zwischen Staudruck und Vordruck und liefert den Meßwert an die Steuereinheit 32. Hierbei wird der Differenzdruck-Meßwert um so geringer ausfallen, je besser das Werkstück 12 die Ausströmöffnung 16 verschließt. Bei der zweiten Ausführungsform wird der Absolutwert des Staudrucks ermittelt, der um so höher ist, je besser die Öffnung 16 verschlossen ist. Der Wert ist einerseits abhängig von der korrekten planparallelen Anlage des Werkstücks 12 auf der Oberfläche 10. Andererseits ist der Meßwert aber auch abhängig von der Oberfläche des Werkstücks 12.

Der Absolut- oder Differenzdruck-Meßwert wird als Einstellungs-Druckwert p in der Speicherzelle 34 abgespeichert. Der Wert p dient im folgenden Betrieb der Vorrichtung 20 als Referenzwert. Ausgehend von diesem Referenzwert wird beurteilt, ob ein korrektes Werkstück vom Typ des Werkstücks 12 in der gewünschten Weise auf der Auflage 10 angeordnet ist oder nicht.

Im Einstellungs-Modus kann eine standardmäßig vorgegebene Empfindlichkeitsschwelle von bspw. d=0,2 bar durch Drücken der Tasten 44 (schrittweise Erhöhung) und 46 (schrittweise Verringerung) verändert werden. Bei der Einstellung wird der Wert d auf dem Display 38 angezeigt. Schließlich wird der Wert d in der Speicherzelle 36 abgelegt.

Nach der Erfassung des Werts p und ggf. Einstellung des Werts d arbeitet die Vorrichtung im Betriebsmodus. Auch im Betriebsmodus kann eine Messung mit automatischer Erkennung eines Werkstücks und/oder Warten auf einen konstanten Druckwert erfolgen, wie oben für den Einstellungsmodus beschrieben. Jeweils nach Anforderung über den Steueranschluß 49 bzw. alternativ nach direkter Aktivierung (bspw. durch einen Schalter) und anschließender Erkennung, daß ein Werkstück aufliegt wird von der Steuervorrichtung 32 eine Messung durchgeführt, d. h. das Schaltventil 64 geöffnet, ein Druckmeßwert erfaßt und danach das Ventil 64 wieder geschlossen.

Im Falle der Differenzdruckmessung wird der erfaßte Differenzdruckmeßwert mit der Summe p+d verglichen. Ist der Wert höher als die Summe, wird ein Fehlersignal am Ausgang 48 erzeugt. Anderenfalls wird ein Steuersignal am Ausgang 48 erzeugt Im Fall der Absolutdruckmessung wird der Druckmeßwert mit der Differenz p-d verglichen. Ist der Wert geringer, wird ein Fehlersignal erzeugt, anderenfalls erfolgt die Freigabe.

Bei der gezeigten Ausführung (direkte Speicherung des Wertes p, Bildung der Summe p+d bzw. Differenz p-d bei jedem Vergleich) ist der Aufwand beim Vergleich geringfügig höher; dafür kann auch nach Erfassung des Wertes p die Toleranzschwelle d noch angepaßt werden. Alternativ kann auch auf die Abspeicherung der Toleranzschwelle d verzichtet werden, indem direkt im Einstellungsmodus die Summe p+d bzw. Differenz p-d abgespeichert wird.

Aufbau und Funktion einer alternativen Vorrichtung, die nach dem Unterdruckprinzip arbeitet (nicht gezeigt) stimmen weitgehend mit der beschriebenen Vorrichtung überein. Bei der Auswertung sind hier lediglich die Vorzeichen entsprechend anzupassen.

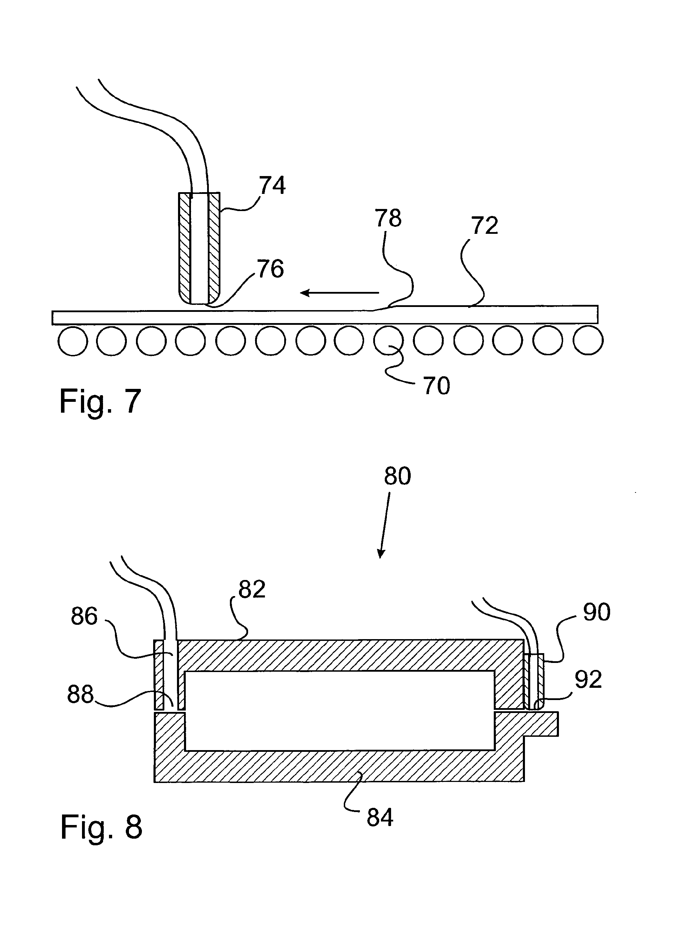

In Fig. 7 ist eine alternative Einsatzmöglichkeit einer Meß-, Steuer- oder Prüfvorrichtung gezeigt. Auf einer Ablage, hier einer Walzstraße 70, befindet sich ein flaches Werkstück, hier ein Bandstahl 72. Über der Ablage 70 ist ein Auslaß 74 mit einer Auslaßöffnung 76 angeordnet. Die Auslaßöffnung 76 befindet sich in einem geringen Abstand oberhalb des Werkstücks 72. Der Auslaß 74 ist mit einer Schlauchverbindung an die Meß-, Steuer- oder Prüfvorrichtung 20 wie oben erläutert angeschlossen, oder an eine alternative Vorrichtung nach dem Unterdruckprinzip.

Abhängig vom Abstand der Auslaßöffnung 76 zum Werkstück 72 ergibt sich ein Staudruck. So kann die Dicke des Werkstücks 72 erfaßt werden. Das Werkstück 72 bewegt sich im dargestellten Beispiel in Längsrichtung der Auflage 70. An einer Stelle 78 ist eine Dickenänderung des Materials gegeben. Sobald die Stelle 78 den Ort der Auslaßöffnung 76 passiert, steigt der Staudruck wegen des verringerten Abstandes an, so daß die Dickenänderung erkannt wird.

Auch wird die Vorrichtung 20 nach Auflage eines Referenz-Werkstücks in den Einstellungs-Modus versetzt. Während aber im vorgenannten Beispiel (Auflagenkontrolle) im späteren Betriebsmodus eine Abweichung des jeweiligen Meßwertes vom Wert p nur in eine Richtung (hier: höherer Wert) überwacht wurde, kann bei der Dickenkontrolle eine Abweichung sowohl nach oben als auch nach unten erfolgen. In diesem Fall wird also überprüft, ob der gemessene Wert im Intervall [p-d; p+d] liegt, so daß ein positives Steuersignal gegeben werden kann. Liegt der Wert außerhalb des Intervalls, wird ein Fehlersignal ausgegeben.

In Fig. 8 ist eine weitere Anwendung einer Meß-, Steuer- oder Prüfvorrichtung nach dem Über- oder Unterdruckprinzip gezeigt. Eine Form 80 besteht aus einem oberen Formteil 82 und einem unteren Formteil 84- Die Form 80, bei der es sich bspw. um eine Gußform, Spritzgußform etc. handeln kann, muß für den Gießvorgang geschlossen sein. Die Schließung der Form 80, bei der das obere Formteil 82 dicht am unteren Formteil 84 aufliegt, soll überwacht werden.

Gemäß einer ersten Ausführung ist, wie links in Fig. 6 gezeigt, innerhalb des oberen Formteils 82 ein Kanal 86 mit einer Öffnung 88 gebildet. Die Öffnung 88 ist in Richtung des unteren Formteils 84 so gerichtet, daß sie bei geschlossener Form verdeckt ist. Mit einem Schlauch ist die Zuleitung 86 an die oben beschriebene Vorrichtung 20 angeschlossen.

Alternativ oder ergänzend hierzu kann, wie rechts in Fig. 6 dargestellt, auch ein separater Auslaß 90 mit Öffnung 92 am oberen Formteil 82 so angebracht sein, daß im geschlossenen Zustand der Form 80 ein Teil des unteren Formteils 84 der Öffnung 92 gegenüberliegt.

Die Schließung der Form 80 wird durch Auswertung des Staudrucks an den Öffnungen 88, 92 überprüft. Hierbei kann eine Einstellung des Druckes p und Toleranzwerts d wie oben beschrieben erfolgen. Die Schließung der Form 80 kann an einem Punkt oder an mehreren im Abstand voneinander angeordneten Punkten erfolgen.

Für die Überprüfung der Formschließung wird eine Meß-, Steuer- oder Prüfvorrichtung nach dem Unterdruckprinzip bevorzugt. So besteht nicht die Gefahr, daß Druckluft eine Öffnung der Form bewirkt oder zu Luftfluß in die Form hineinführt.

## Patentansprüche

1. Verfahren zur Werkstückkontrolle, bei dem
- ein Werkstück (12) vor einer Öffnung (16) angeordnet wird,
- und ein Fluid der Öffnung (16) zugeführt oder durch die Ausströmöffnung angesaugt wird, so daß sich ein von der Lage des Werkstücks (12) vor der Öffnung (16) abhängiger Staudruck einstellt,
- wobei ein Druckmeßwert erfaßt und mit einem Schwellenwert verglichen wird und abhängig vom Ergebnis des Vergleiches ein Ausgabesignal erzeugt wird,
**dadurch gekennzeichnet, daß**
- zur Einstellung des Schwellwerts ein Referenz-Werkstück vor der Öffnung (16) angeordnet wird,
- und ein Einstellungs-Druckwert (p) ermittelt und abgespeichert wird,
- und anhand des Einstellungs-Druckwertes (p) der Schwellenwert festgelegt wird.

2. Verfahren nach Anspruch 1, bei dem
- das Fluid von einer Fluidquelle (54, 26) unter einem Vordruck zugeführt oder von einer Unterdruckeinheit ein Unterdruck zum Ansaugen des Fluids erzeugt wird,
- und das Fluid über ein Blendenelement (64, 28) zwischen Öffnung (16) und Fluidquelle (54, 26) oder Unterdruckeinheit strömt,
- wobei vor der Verarbeitung eines Druckmeßwerts erkannt wird, ob ein Werkstück (12) vor der Öffnung (16) angeordnet ist,
- indem eine Abweichung des Druckmeßwertes von einem Leerlauf-Druckwert erkannt wird, der bei freier Öffnung (16) gemessen wurde.

3. Meß-, Steuer- oder Prüfvorrichtung mit
- einer Öffnung (16),
- einer Fluidquelle (54, 26) zur Zuführung eines Fluids und unter Druck zur Öffnung (16), oder einer Unterdruckeinheit zum Ansaugen des Fluids von der Ausströmöffnung
- einem Drucksensor (30, 60) zur Erfassung eines Druckmeßwertes in Abhängigkeit von einem Staudruck an der Öffnung (16),
- und Auswertemitteln (32) zum Vergleichen des Druckmeßwertes mit einem Schwellwert und zum Erzeugen eines Ausgangssignals abhängig vom Ergebnis des Vergleiches
**dadurch gekennzeichnet, daß**
- eine Eingabevorrichtung (42) vorgesehen ist, um die Auswertemittel (32) in einen Einstellungsmodus zu versetzen, wobei im Einstellungsmodus ein Einstellungs-Druckwert (p) ermittelt wird,
- und Speichermittel (34) vorgesehen sind zur Speicherung des Einstellungs-Druckwertes (p),
- wobei der Schwellenwert anhand des Einstellungs-Druckwertes (p) festgelegt wird.

4. Vorrichtung nach Anspruch 3, bei der
- die Auswertemittel (32) ein Speichermittel (37) zur Speicherung eines Leerlauf-Druckwerts (pₒ) aufweisen,
- wobei vor der Verarbeitung eines Druckmeßwertes die Anwesenheit eines Werkstücks vor der Öffnung (16) anhand einer Abweichung des Druckmeßwertes vom Leerlauf-Druckwert (pₒ) erkannt wird.

5. Vorrichtung nach Anspruch 3 oder 4, bei der
- die Fluidquelle (54, 26) das Fluid unter einem Vordruck zuführt oder eine Unterdruckeinheit einen Unterdruck zum Ansauge des Fluids erzeugt,
- und ein Blendenelement (64, 28) zwischen der Öffnung (16) und der Fluidquelle (54, 26) oder der Unterdruckeinheit vorgesehen ist.

6. Vorrichtung nach Anspruch 5, bei der
- das Blendenelement (28) als Schaltventil (64) ausgebildet ist,
- wobei der Querschnitt des geöffneten Schaltventils (64) geringer als der Leitungsquerschnitt der daran angeschlossenen Leitungen ist.

7. Vorrichtung nach einem der Ansprüche 3-6 bei der
- der Drucksensor (30, 60) einen Druckmeßwert als elektrisches Sensorsignal liefert,
- und die Auswertemittel eine elektrische Schaltung (32) zur Verarbeitung des Scnsorsignals umfaßt.

8. Vorrichtung nach Anspruch 7, bei der
- die elektrische Schaltung (32) so ausgebildet ist, daß im Einstellungsmodus der Druckmeßwert erfaßt und als Einstellungs-Druckwert (p) in einem Speicherelement (34) abgespeichert wird,
- und in einem Toleranzwert-Speicherelement (36) ein Toleranzwert (d) abgespeichert ist,
- wobei in einem Betriebsmodus das erzeugte Steuersignal ein Fehlersignal ist, wenn der Druckmeßwert kleiner ist, als die Differenz von Einstellungs-Druckmeßwert (p) und Toleranzwert (d).

9. Vorrichtung nach Anspruch 7, bei der
- die elektrische Schaltung (32) so ausgebildet ist, daß im Einstellungs-Modus der Druckmeßwert erfaßt und die Differenz aus dem Differenzdruck-Meßwert und einem Toleranzwert in einem Speicherelement abgespeichert wird,
- wobei in einem Betriebsmodus das erzeugte Steuersignal ein Fehlersignal ist, wenn der Druckmeßwert kleiner als der abgespeicherte Summenwert ist.

10. Verfahren zur Dickenkontrolle eines Werkstücks (72), bei dem
- ein Werkstück (72) auf einer Auflage (70) unterhalb einer Öffnung (76) angeordnet wird
- und ein Fluid unter Druck der Öffnung (76) zugeführt oder durch die Ausströmöffnung angesaugt wird, so daß sich ein von der Dicke des Werkstücks (72) abhängiger Staudruck einstellt,
- und ein Druckmeßwert erfaßt und mit einem Schwellwert verglichen wird und abhängig vom Ergebnis des Vergleiches ein Ausgabesignal erzeugt wird.

11. Vorrichtung zur Dickenkontrolle eines Werkstücks mit
- einer Auflage (70) zur Aufnahme eins Werkstück (72),
- einer Öffnung (76) oberhalb der Auflage (70),
- einer Fluidquelle (26, 54) zur Zuführung eines Fluids unter Druck zur Öffnung (76) oder einer Unterdruckeinheit zum Erzeugen eines Unterdrucks zum Ansaugen des Fluids von der Ausströmöffnung, so daß sich ein von der Dicke des Werkstücks (72) abhängiger Staudruck einstellt,
- einem Drucksensor (30, 60) zur Erfassung eines Druckmeßwertes in Abhängigkeit von dem Staudruck an der Öffnung (76),
- und Auswertemitteln (32) zum Vergleichen des Druckmeßwertes mit einem Schwellwert und zur Erzeugung eines Ausgabesignals abhängig vom Ergebnis des Vergleichs.

12. Verfahren zur Überprüfung der Schließung einer Form, bei dem
- ein Fluid unter Druck einer Öffnung (88, 92) zugeführt oder ein Fluid durch eine Ausströmöffnung angesaugt wird,
- die an einem ersten Formteil (82), das bei geschlossener Form (80) an einem zweiten Formteil (84) anliegt vorgesehen und in Richtung des zweiten Formteils (84) geöffnet ist,
- so daß sich abhängig von der Schließung der Form (80) ein Staudruck einstellt,
- und ein Druckmeßwert in Abhängigkeit von dem Staudruck an der Öffnung (88, 92) erfaßt und mit einem Schwellwert verglichen wird und abhängig vom Ergebnis des Vergleiches ein Ausgabesignal erzeugt wird.

13. Vorrichtung zur Überprüfung der Schließung einer Form, mit
- einem ersten und einem zweiten Formteil (82, 84), die bei geschlossener Form (80) aneinander anliegen,
- einer am ersten Formteil (82) angeordneten Öffnung (88, 92) in Richtung des zweiten Formteils (84),
- einer Fluidquelle (54, 26) zur Zuführung eines Fluids unter Druck zur Öffnung (88, 92) oder einer Unterdruckeinheit zum Ansaugen des Fluids von der Ausströmöffnung, so daß sich ein von der Schließung der Form (80) abhängiger Staudruck einstellt,
- einem Drucksensor (30, 60) zur Erfassung eines Druckmeßwertes in Abhängigkeit von dem Staudruck an der Öffnung (88, 92),
- und Auswertemitteln (32) zum Vergleichen des Druckmeßwertes mit einem Schwellwert und zum Erzeugen eines Ausgangssignals abhängig vom Ergebnis des Vergleiches.

14. Verfahren zur Lagekontrolle, bei dem
- ein zu prüfendes Teil vor einer Öffnung angeordnet wird
- und ein Fluid durch die Öffnung angesaugt wird, so daß sich ein von der Lage des Teils vor der Öffnung abhängiger Staudruck einstellt,
- und ein Druckmeßwert abhängig von den Staudruck erfaßt wird.
